# NEUE EUROPÄISCHE PATENTSCHRIFT

(11) **EP 0 587 836 B2**
(45) Veröffentlichungstag und Bekanntmachung des Hinweises auf die Entscheidung über den Einspruch: **17.11.1999**
(45) Hinweis auf die Patenterteilung: 06.12.1995
(21) Anmeldenummer: 93905208.0
(22) Anmeldetag: 20.03.1993
(51) Int. Cl.: F01N 7/00

(54) **VERFAHREN UND VORRICHTUNG ZUM BEURTEILEN DER FUNKTIONSFÄHIGKEIT EINES KATALYSATORS**
METHODS AND DEVICE FOR ASSESSING THE OPERATABILITY OF A CATALYTIC CONVERTER
PROCEDE ET DISPOSITIF POUR EVALUER L'APTITUDE AU FONCTIONNEMENT D'UN CATALYSEUR

(30) Priorität: 03.04.1992 DE 4211092
(43) Veröffentlichungstag der Anmeldung: 23.03.1994
(73) Patentinhaber: ROBERT BOSCH GMBH, 70442 Stuttgart (DE)
(72) Erfinder: RIES-MUELLER, Klaus, D-6927 Bad Rappenau (DE)
(86) Internationale Anmeldenummer: DE9300257
(87) Internationale Veröffentlichungsnummer: WO9320340

(56) Entgegenhaltungen:
- EP-A- 0 231 611
- EP-A- 0 236 659
- EP-A- 0 433 735
- EP-A- 0 475 177
- WO-A-91/14856
- DE-A- 2 643 739
- DE-A- 3 516 981
- DE-A- 4 122 787
- GB-A- 1 373 826
- US-A- 4 251 990
- US-A- 4 622 809
- US-A- 4 831 838
- US-A- 4 947 818
- US-A- 5 060 473
- PATENT ABSTRACTS OF JAPAN vol. 15, no. 129 (M-1098)28. März 1991 & JP,A,03 015 619 (NISSAN MOTOR COMPANY LTD) 24. Januar 1991
- SAE Paper 910175
- VDI Bericht 639 (1987)

## Beschreibung

Das Folgende betrifft ein Verfahren und eine Vorrichtung zum Beurteilen der Funktionsfähigkeit eines Katalysators, der im Abgaskanal eines Verbrennungsmotors betrieben wird.

### Stand der Technik

DE-A-24 44 334 (US-A-3,969,932) beschreibt ein Verfahren und eine Vorrichtung, bei denen die Funktionsfähigkeit eines Katalysators mit Hilfe einer Zeitmessung bestimmt wird, die dem Speichervermögen des Katalysators Ausdruck verleiht Der Katalysator wird zunächst ganz mit Sauerstoff geladen, indem der zugehörige Verbrennungsmotor ausreichend lange mager betrieben wird. Dann wird der Motor mit vorgegebenen Betriebsbedingungen fett betrieben, wodurch der im Katalysator gespeicherte Sauerstoff aufgebraucht wird. Solange der Katalysator noch Sauerstoff an das ihm zugeführte Abgas zuführen kann, weist das von ihm ausgegebene Abgas den Lambdawert Eins auf. Sobald jedoch der Sauerstoff aufgebraucht ist, wird am Ausgang des Katalysators ein Lambdawert gemessen, der fettes Gemisch anzeigt Die Zeitspanne zwischen dem Beginn des Fettbetriebs und dem Zeitpunkt, zu dem dies am Ausgang des Katalysators erkannt wird, ist ein Maß für den Alterungszustand des Katalysators; je kürzer diese Zeitspanne ist, desto stärker ist der Katalysator gealtert. Wenn die gemessene Zeitspanne unter eine vorgegebene Zeitspanne fällt, wird der Katalysator als nicht mehr funktionsfähig beurteilt.

Andere Verfahren setzen zum Bestimmen der Funktionsfähigkeit eines Katalysators die Lambdawertsignale zueinander in Beziehung, wie sie vor und hinter einem Katalysator erfaßt werden. So ist es z. B. in DE-A-23 04 622 (US-A-3,962,866) beschrieben, daß die Funktionsfähigkeit mit Hilfe der Differenz zwischen den Amplituden der genannten beiden Signale bestimmt wird. Sobald die Differenz unter einen Schwellenwert fällt, wird der Katalysator als nicht mehr funktionsfähig ausgegeben. Gemäß DE-A-35 00 594 wird statt der Differenz das Verhältnis der Amplituden verwendet, wobei dieses Verhältnis auch noch gemittelt wird.

Aus den Anmeldezeitpunkten der vorstehend genannten patentbezogenen Schriften ergibt sich, daß sich die Fachwelt seit langer Zeit bemüht, die Funktionsfähigkeit eines Katalysators zuverlässig zu beurteilen. Ein für alle Fälle zufriedenstellendes Verfahren konnte jedoch noch nicht gefunden werden. Es bestand daher der Wunsch, weitere Verfahren und Vorrichtungen zum Beurteilen der Funktionsfähigkeit eines im Abgas eines Verbrennungsmotors betriebenen Katalysators aufzufinden.

### Darstellung der Erfindungen

Ein erstes erfindungsgemäßes Verfahren ist durch die Merkmale von Anspruch 1 gekennzeichnet.

Ein zweites erfindungsgemäßes Verfahren ist durch die Merkmale von Anspruch 3 gekennzeichnet.

Erfindungsgemäße Vorrichtungen weisen Einrichtungen zum Ausführen der genannten Schritte aus.

Den erfindungsgemäßen Verfahren und Vorrichtungen liegt folgende Erkenntnis zugrunde. Wenn ein Katalysator nach einem Kaltstart des zugeordneten Verbrennungsmotors durch das heiße Abgas vom Verbrennungsmotor aufgeheizt wird, erfolgt dies mit einer gewissen Aufheizrate, die im wesentlichen von der Wärmekapazität des Katalysators, der vom Motor zugeführten Wärme und dervom Katalysatorabgeleiteten Wärme abhängt. Sobald der Katalysator eine Konvertierungsbeginn-Temperatur erreicht hat, kann er selbst Wärme entwickeln, und zwar dadurch, daß er oxidierbare Abgaskomponenten mit in ihm gespeichertem Sauerstoff verbrennt Sobald dies geschieht, steigt seine Temperatur erheblich schneller an, als dies nur bei Erwärmung durch die im Abgas vom Motor gespeicherte Wärmemenge der Fall ist. Es hat sich gezeigt, daß die Konvertierungsbeginn-Temperatur relativ stark vom Alterungszustand des Katalysators abhängt Eine gewisse vorgegebene Vergleichstemperatur, die über der Konvertierungsbeginn-Temperatur eines neuen Katalysators liegt, wird daher von einem neuen Katalysator wesentlich schneller erreicht als von einem alten.

Das erste erfindungsgemäße Verfahren nutzt unmittelbar die eben erwähnte Erkenntnis, daß die Konvertierungsbeginn-Temperatur vom Katalysatoralter abhängt. Das zweite erfindungsgemäße Verfahren ist demgegenüber noch empfindlicher, da in sein Ergebnis nicht nur die sich mit dem Katalysatoralter erhöhende Konvertierungsbeginn-Temperatur eingeht, sondern auch die Konvertierungsdynamik, die sich mit zunehmendem Katalysatoralter ebenfalls verschlechtert, so daß selbst dann, wenn die Konvertierung eingesetzt hat, dies bei einem alten Katalysator nicht zu einer so schnellen Temperaturerhöhung führt wie bei einem neuen. Dieses zeitliche Verhalten kann dadurch überprüft werden, daß aus einem Modell abgeschätzt wird, wann der Katalysator die Vergleichstemperatur erreicht haben müßte und dann untersucht wird, ob diese tatsächlich vorliegt.

### Zeichnung

Fig. 1: Diagramm betreffend den zeitlichen Verlauf der Erwärmung dreier unterschiedlich stark gealterter Katalysatoren;
Fig. 2: Diagramm betreffend den zeitlichen Verlauf des Ausgangssignals einer hinter einem Katalysator angeordneten Sauerstoffsonde, wobei der Signalverlauf zeitlich mit demjenigen für den neuen Katalysator in Fig. 1 korreliert ist;
Fig. 3: Blockdiagramm zum Veranschaulichen eines ersten Verfahrens und einer ersten Vorrichtung zum Bestimmen der Funktionsfähigkeit des Alterungszustandes eines Katalysators;
Fig. 4: Flußdiagramm, wie es von Funktionsblöcken des Blockdiagramms von Fig. 3 ausführbar ist;
Fig. 5 und 6: Darstellungen entsprechend denen der Fig. 3 und 4, jedoch für ein anderes Verfahren und eine andere Vorrichtung zum Bestimmen der Funktionsfähigkeit eines Katalysators; und
Fig. 7 und 8: Darstellungen entsprechend denen der Fig. 3 und 4, jedoch für ein zweites Verfahren und eine zweite Vorrichtung zum Bestimmen der Funktionsfähigkeit eines Katalysators.

### Beschreibung von Ausführungsbeispielen

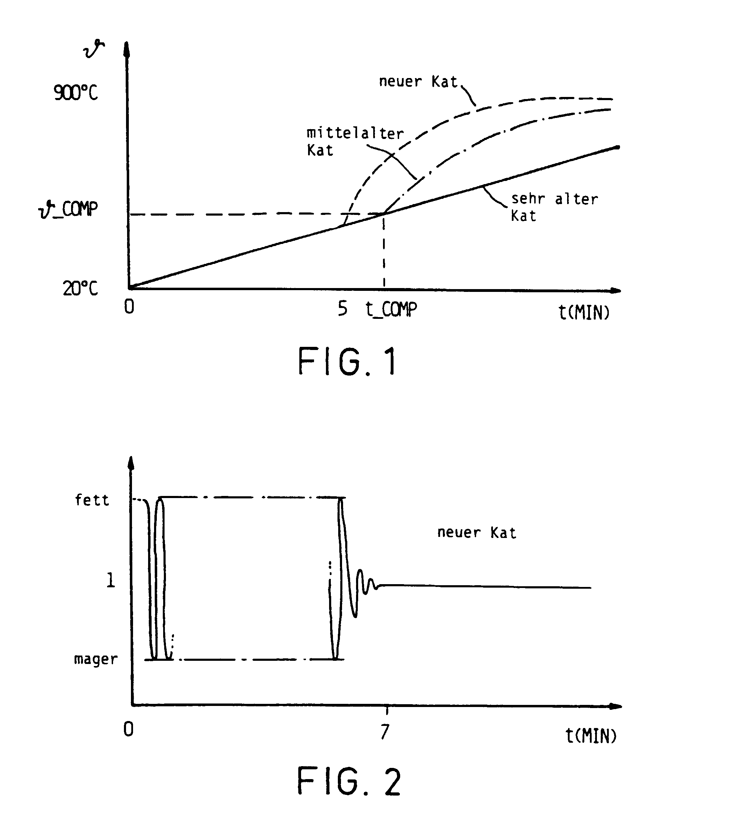

Fig. 1 zeigt den zeitlichen Verlauf der Erwännung eines Katalysators bei Aufheizen durch das Abgas eines Verbrennungsmotors, der bei relativ niedriger Last betrieben wird. Es benötigt etwa 5 Minuten, um den Katalysator von 20 °C auf 300 °C aufzuheizen. Damit ist im wesentlichen die Konvertierungsbeginn-Temperatur eines ziemlich neuen Katalysators erreicht Ab dieser Temperatur werden oxidierbare Abgaskomponenten verbrannt, wobei bekannterweise Wärme entsteht, so daß der Katalysator zusätzlich durch diese Wärme aufgeheizt wird. Daher steigt nun seine Temperatur erheblich steiler an, als dies zuvor bei der bloßen Erwärmung durch das warme Abgas der Fall war. Der steilere Temperaturanstieg für den neuen Katalysator ist gestrichelt dargestellt, während der Temperaturverlauf, wie er bei bloßem Aufheizen eines nicht mehr konvertierenden sehr alten Katalysators erzielt wird, mit durchgezogener Linie dargestellt ist. Wenn der Katalysator mittelstark gealtert ist, weist er eine erhöhte Konvertierungsbeginn-Temperatur auf, z. B. eine solche von 350 °C, und der durch die Verbrennungwänne bedingte Temperaturanstieg ist weniger steil als bei einem neuen Katalysator. Dies ist durch eine strichpunktierte Linie in Fig. 1 veranschaulicht

Fig. 2 zeigt zeitkorreliert mit dem Temperaturverlauf für den neuen Katalysator gemäß Fig. 1 den Verlauf des Ausgangssignals einer Sauerstoffsonde, die am Ausgang des Katalysators angeordnet ist Nach etwa 30 Sekunden hat die beheizte Sonde eine Temperatur erreicht, bei der sie den Lambdawert des an ihr vorbeiströmenden Abgases korrekt mißt. Dasselbe gilt für eine vor dem Katalysator angeordnete Sonde, mit der der Verbrennungsmotor lambdageregelt wird. Bis zu diesem Zeitpunkt wird der Motor fett betrieben, was in Fig. 2 für das von der hinteren Sonde gemessene Signal nur gestrichelt eingezeichnet ist, da in diesem Anfangszeitraum die Sonde eigentlich ein Signal mit anderem Verlauf ausgibt. Sobald die Sonde betriebswarm ist, zeigt sie die Schwankungen der Zweipunkt-Lambdaregelung an, die eine Periode von einigen Sekunden für Wechsel zwischen Mager und Fett und umgekehrt aufweisen. Sobald der Katalysator zum Zeitpunkt t_CONV seine Konvertierungsbeginn-Temperatur erreicht hat, also nach etwa 5 Minuten, wird die Amplitude der leicht gemittelten Schwankungen immer geringer, bis schließlich mit dem Erlangen der vollen Konvertierungsfähigkeit dauernd der Wert "1" gehalten wird, vorausgesetzt es wird auf diesen Lambdawert geregelt.

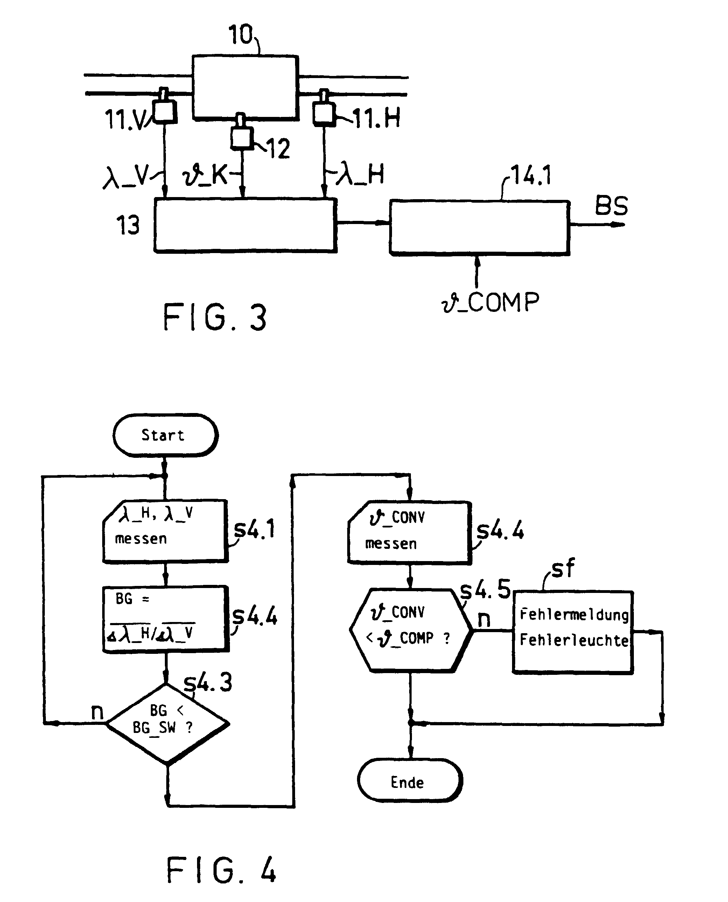

Aus den Fig. 1 und 2 sind drei Verfahren und zugehörige Vorrichtungen ableitbar, wie sie im folgenden anhand der Fig. 3 und 4, 5 und 6 bzw. 7 und 8 näher beschrieben werden. Die erste erfindungsgemäße Möglichkeit besteht darin, zu untersuchen, wann der Katalysator zu konvertieren beginnt, die zugehörige Katalysatortemperatur zu erfassen und zu untersuchen, ob diese unterhalb einer vorgegebenen Vergleichstemperatur ϑ_COMP liegt. In Fig. 1 ist diese Vergleichstemperatur so gelegt, daß sie im wesentlichen mit der Konvertierungsbeginn-Temperatur für den mittelstark gealterten Katalysator mit der strichpunktierten Temperaturlinie übereinstimmt. Liegt die tatsächlich gemessene Temperatur bei Konvertierungsbeginn des aktuellen Katalysators unter dieser Vergleichstemperatur, wird der Katalysator als funktionsfähig beurteilt. Bei Zweipunktregelung kann der Konvertierungsbeginn mit Hilfe der Schwankungsamplitude des Ausgangssignals der hinter dem Katalysator angeordneten Sauerstoffsonde ermittelt werden.

Beim einem anderen Verfahren werden der Motor und der Katalysator mit genau vorgegebenen Betriebsbedingungen betrieben, z. B. denjenigen Bedingungen, mit denen die Kurven gemäß Fig. 1 aufgenommen wurden. Es ist dann der eben genannten Vergleichstemperatur ϑ_COMP eine Vergleichszeitspanne Δt-_COMP zugeordnet, die der Differenz zwischen dem Startzeitpunkt des Verfahrens und dem Konvertierungsbeginn eines gerade noch brauchbaren Katalysators entspricht. Ist die aktuell bis zum Konvertierungsbeginn gemessene Zeitspanne kürzer als die Vergleichszeitspanne, zeigt dies an, daß der Katalysator funktionsfähig ist.

Eine zweite erfindungsgemäße Möglichkeit besteht darin, den Temperaturverlauf des Katalysators mit einem Modell abzuschätzen. Dabei wird für das Modell nach Erreichen der Konvertierungsbeginn-Temperatur und für die bei der Konvertierung entstehende Wärme ein gerade noch brauchbarer Katalysator angesetzt. Sobald der Katalysator gemäß diesem Modell eine Vergleichstemperatur erreicht haben sollte, wird die tatsächliche Temperatur untersucht, sei es durch unmittelbare Temperaturmessung oder durch Untersuchung, ob der Katalysator bereits konvertiert. Ergibt sich, daß die aktuelle Temperatur höher ist als die Vergleichstemperatur, zeigt dies an, daß der Katalysator funktionsfähig ist. Alternativ zur eben genannten Vorgehensweise kann so verfahren werden, daß untersucht wird, wann der Katalysator tatsächlich die Vergleichstemperatur erreicht. Dann wird die gemäß dem Modell zu erwartende Temperatur bestimmt. Wenn diese niedriger ist als die tatsächliche Temperatur, zeigt dies an, daß der aktuell untersuchte Katalysator besser konvertiert als der für das Modell angenommene gerade noch brauchbare. Der aktuelle Katalysator wird demgemäß als funktionsfähig beurteilt.

Das Blockdiagramm von Fig. 3 veranschaulicht einen Katalysator 10 mit einer vor ihm angeordneten Sauerstoffsonde 11.V und einer hinter im angeordneten Sauerstoffsonde 11.H. Diese Sonden werden im folgenden als vordere bzw. hintere Sonde bezeichnet. Die Temperatur des Katalysators 10 wird mit einem Temperatursensor 12 gemessen. In einem Untersuchungsblock 13 wird überprüft, ob der Katalysator seine Konvertierungsbeginn-Temperatur erreicht hat, und wenn dies der Fall ist, wird diese Temperatur ϑ_CONV erfaßt. In einem Vergleichs/Beurteilungs-Block 14.1 wird die Temperatur mit einer Vergleichstemperatur ϑ_COMP verglichen. Wenn die Konverfierungsbeginn-Temperatur ϑ_CONV für den aktuellen Katalysator unter der Vergleichstemperatur ϑ_COMP liegt, gibt der Vergleichs/Beurteilungs-Block 14.1 ein Beurteilungssignal BS aus, das anzeigt, daß der Katalysator funktionsfähig ist

Das eben kurz beschriebene Verfahren wird nun anhand von Fig. 4 näher erläutert In einem Schritt s4.1 werden von der hinteren und vorderen Lambdasonde ausgegebene Lambdawerte λ_V gemessen (Es können auch unmittelbar die ausgegebenen Spannungen verwendet werden). Dann wird (Schritt s4.2) eine Beurteilungsgröße BG berechnet, die dem Verhältnis der gemittelten Lambdawertschwankungen entspricht, wie sie von der hinteren bzw. vorderen Sonde erfaßt werden. Ergibt sich in einem Schritt s4.3, daß die Beurteilungsgröße noch nicht unter einen Schwellenwert BG_SW gefallen ist, zeigt dies an, daß der Katalysator noch nicht richtig konvertiert. Es werden dann die Schritte s4.1 bis s4.3 wiederholt. Ergibt sich schließlich in Schritt s4.3, daß der Katalysator nun zufriedenstellend konvertiert, wird die zugehörige Temperatur ϑ_CONV gemessen (Schritt s4.4), und es wird untersucht, ob diese Temperatur unter der Vergleichstemperatur ϑ_COMP liegt (Schritt s4.5). Ist dies der Fall, wird das Verfahren beendet. Andernfalls wird in einem Fehlerschritt sf eine Fehlermeldung ausgegeben, und es wird eine Fehlerleuchte zum Aufleuchten gebracht, die dem Fahrer des Fahrzeugs mit dem Motor und dem Katalysator anzeigt, daß der Katalysator überprüft werden sollte.

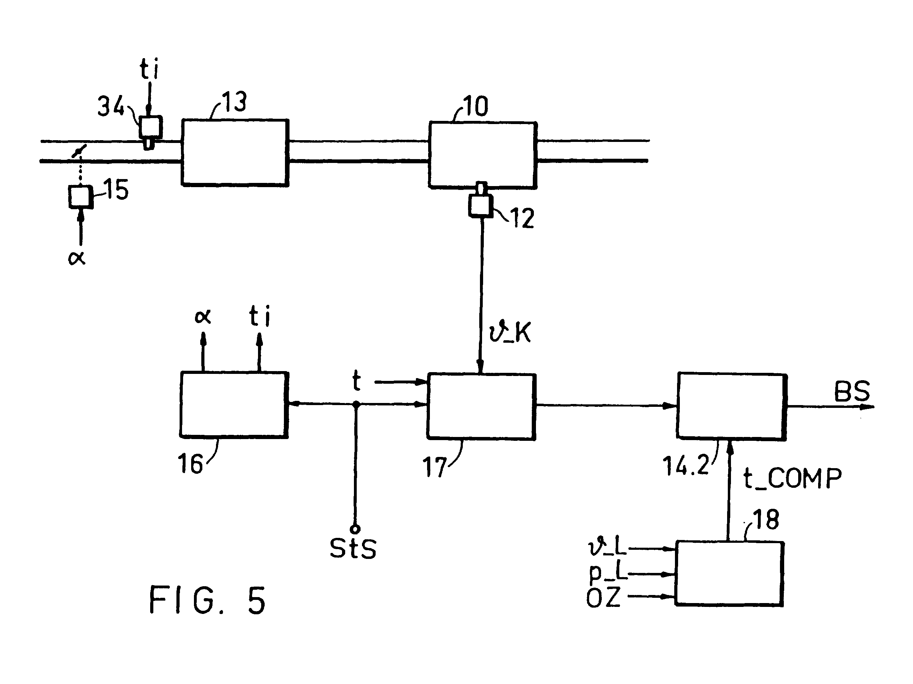

Im Blockdiagramm von Fig. 5 sind der Katalysator 10, der an ihm befestigte Temperatursensor 12, ein Verbrennungsmotor 13, eine Einspritzanordnung 34 und eine Drosselklappenanordnung 15 vorhanden, die ein Drosselklappenwinkelsignal a ausgibt. Mit Hilfe eines Startsignals StS wird durch einen Motorsteuerungsblock 16 ein Steuerungsablauf in Betrieb gesetzt, der dafür sorgt, daß der Verbrennungsmotor 13 unter vorgegebenen Bedingungen betrieben wird, vorzugsweise Leerlauf mit mittlerer Last Dies soll für ein relativ langsames Aufheizen des Katalysators sorgen, damit der Zeitpunkt des Konvertierungsbeginns des Katalysators mit möglichst guter relativer Genauigkeit gemessen werden kann. Diese Zeitmessung erfolgt durch einen Zeitmeßblock 17, der die Zeitspanne ab dem Start des Motors bis zu dem Zeitpunkt erfaßt, zu dem die vom Temperatursensor 12 erfaßte Katalysatortemperatur die anhand von Fig. 1 erläuterte Vergleichstemperatur erreicht. In einem Vergleichs/Beurteilungsblock 14.2 wird untersucht, ob die gemessene Zeitspanne Δt größer ist als eine Vergleichszeitspanne Δt_COMP. Die Vergleichszeitspanne wird dabei von einem Vergleichszeit-Vorgabeblock 18 ausgegeben, der diese Vergleichszeitspanne abhängig von der Lufttemperatur ϑ_L dem Luftdruck p_L und der Oktanzahl OZ des dem Verbrennungsmotor 13 zugeführten Kraftstoffs bestimmt Ist die genannte Vergleichsbedingung erfüllt, gibt derverglelchs/Beurteilungs-Block 14.2 ein Beurteilungssignal BS aus, das anzeigt, daß der Katalysator 10 funktionsfähig ist.

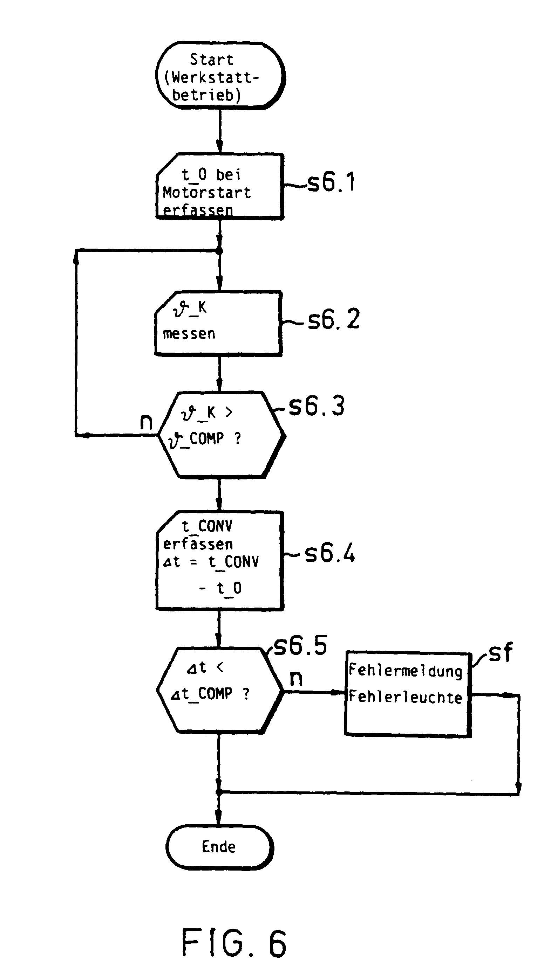

Das vorstehend unter Bezugnahme auf Fig. 5 kurz erläuterte Verfahren wird nun ausführlicher anhand von Fig. 6 beschrieben. Mit Start des Verbrennungsmotors wird in einem Schritt s6.1 der zugehörige Zeitpunkt t_0 erfaßt. Dann wird die Katalysatortemperatur ϑ_K gemessen (Schritt s6.2), und es wird untersucht (Schritt s6.3), ob diese Temperatur die Vergleichstemperatur ϑ_COMP überschritten hat. Ist dies nicht der Fall, werden die Schritte s6.2 und s6.3 so lange wiederholt, bis der Katalysator die Vergleichstemperatur überschreitet. Der zugehörige Zeitpunkt t_CONV wird erfaßt, und es wird die Differenz Δt zwischen den genannten beiden Zeitpunkten erfaßt. Diese Differenz ist die Zeitspanne, die der Xatalysator brauchte, um ausgehend von vorgegebenen Anfangsbedingungen bei vorgegebenen Betriebsbedingungen die Vergleichstemperatur ϑ_COMP zu erreichen. In einem Schritt s6.5 wird untersucht, ob diese Zeitspanne At kleiner ist als die Vergleichszeitspanne Δt_COMP. Ist dies der Fall, wird das Verfahren beendet, andernfalls folgt wieder der für Fig. 4 erläuterte Fehlerschritt sf.

Das eben genannte Verfahren eignet sich gut zur Untersuchung in einer Werkstatt. Sobald vorgegebene Startbedingungen erfüllt sind, z. B. Katalysatortemperatur unter 30 °C und Motortemperatur unter 50 °C, wird das Verfahren gestartet, und es wird im Stillstand des Fahrzeugs bei genau festgelegten Betriebsbedingungen ausgeführt.

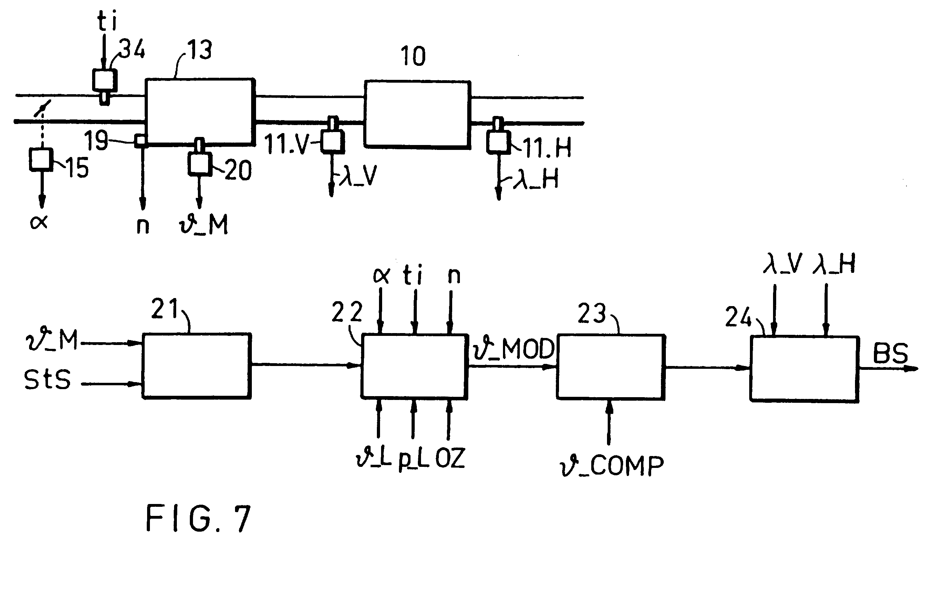

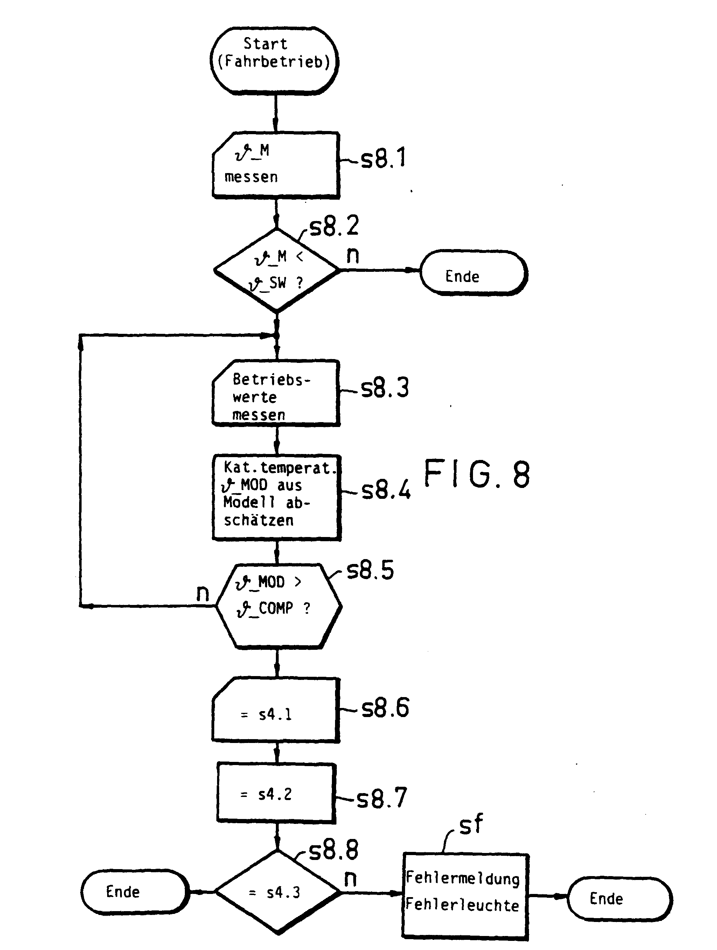

Demgegenüber kann ein Verfahren, wie es nun anhand der Fig. 7 und 8 erläutert wird, auch im Fahrbetrieb eines Fahrzeugs ausgeführt werden. Dabei wird das Temperaturverhalten des Katalysators durch ein Modell nachgebildet. Hierzu muß zunächst die Wärmekapazität des Katalysators bekannt sein. Weiterhin muß die ihm vom Motor zugeführte Wärmemenge abgeschätzt werden. Dies erfolgt am besten durch Erfassen der dem Motor zugeführten Kraftstoffmenge und durch Berechnen des Anteils von Verbrennungsenergie, die dem Katalysator zugeführt wird. Der Anteil an Verbrennungsenergie hängt vom jeweiligen Lastzustand und der Drehzahl n des Motors ab. Für jeweils kleine Zeiteinheiten kann somit aus Kraftstoffmenge, Last und Drehzahl die Wärmemenge erfaßt werden, die dem Katalysator zugeführt wird. Diese Wärmemengen werden aufsummiert, um so die Gesamtwärmemenge zu erhalten, die der Katalysator ab dem Start der Verfahrens erhält. Weiterhin muß noch die Wärmemenge abgeschätzt werden, die der Katalysator an die Umgebung abgibt. Die aus einem solchen Wärmemengenmodell abgeschätzte Temperatur des Katalysators wird mit seiner tatsächlichen Temperatur verglichen, wie oben in Zusammenhang mit den Fig. 1 und 2 beschrieben. Das Verfahren liefert um so genauere Ergebnisse, je genauer das Temperaturmodell arbeitet.

Das Blockdiagramm von Fig. 7 zeigt den Katalysator 10, die vordere Lambdasonde 11.V, die hintere Lambdasonde 11.H, die Einspritzanordnung 18, die Drosselklappenanordnung 15, einen Drehzahlsensor 19 und einen Motortemperatursensor 20. Für die Steuerung sind ein Startsignal block 21, ein Temperaturmodellblock 22, ein erster Vergleicher 23.1 und ein zweiter Vergleicher 23.2 vorhanden. Der Startsignalblock 21 startet ein Beurteilungsverfahren, wenn dies gemäß einem Startsignal StS gewünscht wird und dabei die Motortemperatur ϑ_M unter einer Schwelle liegt. Noch zuverlässiger wäre es, die Temperaturdes Katalysators zu messen und das Verfahren nur dann zu starten, wenn dessen Temperatur unter einer Schwelle liegt. In Zusammenhang mit den Fig. 7 und 8 wird davon ausgegangen, daß das Verfahren nur gestartet wird, wenn der Katalysator in etwa auf Umgebungstemperatur liegt. Ab dem Start des Verfahrens bestimmt der Temperaturmodelblock 22 unter Zuhilfenahme der vorstehend erläuterten Größen α,n, ti, ϑ_L, p_L und OZ eine für den Katalysator abgeschätzte Temperatur ϑ_MOT. Diese wird im ersten Vergleichsblock 23 mit der Vergleichstemperatur ϑ_COMP verglichen, die wie oben erwähnt gewählt ist. Sobald diese Bedingung erfüllt ist, untersucht die Beurteilungseinrichtung 24, ob der Katalysator bereits konvertiert. Dies kann mit Hilfe des Signales λ_H und evenuell zusätzlich des Signales λ_V erfolgen, wie weiter oben in Zusammenhang mit Fig. 4 beschrieben.

Anhand des Flupdiagrammes von Fig.8 wird nun das kurz anhand von Fig. 7 erläuterte Verfahren ausführlicher beschrieben. Nach dem Start des Verfahrens wird in einem Schritt s8.1 die Motortemperatur ϑ_M gemessen. Liegt diese Temperatur über einer Schwellentemperatur ϑ_SW, was in einem Schritt s8.2 untersucht wird, wird das Verfahren sofort beendet, da dann nicht auszuschließen ist, daß der Katalysator bereits bis über seine Konvertierungsbeginn-Temperatur erwärmt ist. Liegt dagegen ein Kaltstart vor, werden Werte von Betriebsgrößen des Verbrennungsmotors und des Katalysators gemessen (Schritt s8.3). Mit Hilfe der erfaßten Werte und eines Modells für die Temperatur des Katalysators wird die abgeschätzte Katalysatortemperatur ϑ_MOD bestimmt (Schritt s8.4). Dann wird untersucht (Schritt s8.5), ob die abgeschätzte Temperatur die oben genannte Vergleichstemperatur ϑ_COMP erreicht hat. Ist dies nicht der Fall, werden die Schritte s8.3 bis s8.5 wiederholt. Andernfalls werden Schritte s8.6 bis s8.8 ausgeführt, die völlig den Schritten s4.1 bis s4.3 entsprechen, mit denen untersucht wird, ob der Katalysator bereits konvertiert. Ergibt sich in Schritt s8.8, daß der Katalysator noch nicht konvertiert, obwohl die Vergleichstemperatur ϑ_COMP überschritten ist, wird ein Fehlerschritt sf erreicht, der dem entsprechend bezeichneten Schritt von Fig. 4 entspricht. Danach oder unmittelbar nach Schritt s8.8, wenn nämlich der Katalysator ordnungsgemäß konvertiert, wird das Ende des Verfahrens erreicht.

Bei den bisherigen Verfahren wurde davon ausgegangen, daß mit dem Fehlerschritt sf unmittelbar eine Fehlerleuchte zum Aufleuchten gebracht wird. Das Anzeigen eines Fehlers kann jedoch auch erst erfolgen, wenn eine vorgegebene Anzahl von Fehlermeldungen innerhalb einervorgegebenen Anzahl von Prüfabläufen aufgetreten ist Dabei kann die Anzahl gezählter Fehlermeldungen auch wieder erniedrigt werden, wenn innerhalb einer vorgegebenen Anzahl von Früfäbläufen keine weiteren Fehlermeldung mehr auftritt. Auf die Art und Weise, wie eine Fehlermeldung behandelt wird, die von einem erfindungsgemäßen Verfahren geliefert wird, kommt es nicht an, sondern nur darauf, daß zum Feststellen eines Fehlers die Erkenntnis genutzt wird, daß ein Katalysator um so später und langsamer Konvertierungswärme entwickelt, je schlechter seine Funktionsfähigkeit ist.

Beim Ausführungsbeispiel der Fig. 5 und 6 wurde davon ausgegangen, daß die Zeitmessung unter Nutzung des Signals des Temperatursensors 12 erfolgt. Es kann jedoch auch die Zeitspanne gemessen werden, die ab dem Start des Verfahrens vergeht, bis ein Ablauf gemäß den Schritten s4.1 bis s4.3 meldet, daß der Katalysator ordnungsgemäß konvertiert Dann wird die so festgestellte Zeitspanne mit der Vergleichszeitspanne Δt_COMP verglichen.

Entsprechend umgekehrt kann bei dem anhand der Fig. 7 und 8 erläuterten Verfahren vorgegangen werden, daß nämlich im Beurteilungsblock 24 nicht untersucht wird, ob der Katalysator bei Erfülltsein der im Vergleichsblock 23 untersuchten Bedingung ordnungsgemäß konvertiert, sondern daß untersucht wird, ob die Katalysatortemperatur über der Vergleichstemperatur ϑ_COMP liegt.

## Patentansprüche

1. Verfahren zum Beurteilen der Funktionsfähigkeit eines im Abgaskanal eines Verbrennungsmotors betriebenen Katalysators, bei dem
- der Verbrennungsmotor ausgehend von einem Zustand betrieben wird, bei dem die Katalysatortemperatur unter der Konvertierungsbeginn-Temperatur eines neuen Katalysators liegt,
- untersucht wird, bei welcher Temperatur der durch das Abgas des Motors erwärmte Katalysator zu konvertieren beginnt,
- die festgestellte Konvertierungsbeginn-Temperatur mit einer vorgegebenen Vergleichstemperatur verglichen wird, die über der Konvertierungsbeginn-Temperatur eines neuen Katalysators liegt und dann, wenn die festgestellte Konvertierungsbeginn-Temperatur unter der Vergleichstemperatur liegt, der Katalysator als funktionsfähig beurteilt wird, wobei
zur Untersuchung, bei welcher Temperatur der Katalysator zu konvertieren beginnt, eine Beurteilungsgröße BG berechnet wird, die dem Verhältnis der gemittelten Lambdawertschwankungen entspricht, wie sie von je einer hinter bzw. vor dem Katalysator angeordneten Abgassonde erfaßt werden und daß dann, wenn die Beurteilungsgröße BG einen Schwellwert unterschreitet, die zugehörige Temperatur des Katalysators als Konvertierungsbeginn-Temperatur erfaßt wird.

2. Vorrichtung zum Beurteilen der Funktionsfähigkeit eines im Abgaskanal eines Verbrennungsmotors betriebenen Katalysators gemäß dem Verfahren nach Anspruch 1, mit einer
- Ermittlungseinrichtung (13) zum Untersuchen, bei welcher Temperatur der vom Abgas des Motors erwärmte Katalysator zu konvertieren beginnt, und
- einer Vergleichs/Beurteilungseinrichtung (14.1), die die festgestellte Konvertierungsbeginn-Temperatur mit der Konvertierungsbeginn-Temperatur eines neuen Katalysators vergleicht,
und dann, wenn die festgestellte Konvertierungsbeginn-Temperatur unter der Vergleichstemperatur liegt, den Katalysator als funktionsfähig beurteilt, dadurch gekennzeichnet, daß die Ermittlungseinrichtung (13) zur Untersuchung, bei welcher Temperatur der Katalysator zu konvertieren beginnt, eine Beurteilungsgröße BG berechnet, die dem Verhältnis der gemittelten Lambdawertschwankungen entspricht, wie sie von je einer hinter bzw. vor dem Katalysator angeordneten Abgassonde erfaßt. werden und daß dann, wenn die Beurteilungsgröße BG einen Schwellwert unterschreitet, die zugehörige Temperatur des Katalysators als Konvertierungsbeginn-Temperatur erfaßt wird.

3. Verfahren zum Beurteilen der Funktionsfähigkeit eines im Abgaskanal eines Verbrennungsmotors betriebenen Katalysators, wobei
der Verbrennungsmotor ausgehend von einem Zustand betrieben wird, bei dem die Katalysatortemperatur unter der Konvertierungsbeginn-Temperatur eines neuen Katalysators liegt;
dadurch gekennzeichnet, daß
- der Verlauf der Temperatur des Katalysators aus einem Modell abgeschätzt wird, in das jeweils aktuelle Werte von Betriebsgrößen des Verbrennungsmotors eingegeben werden und wobei im Rahmen des Modells für die bei der Konvertierung freiwerdende Wärme von einem gerade noch brauchbaren Katalysator ausgegangen wird;
- die tatsächliche Temperatur des Katalysators untersucht wird, wenn die aus dem Modell abgeschätzte Temperatur eine Vergleichstemperatur erreicht hat, die über der Konvertierungsbeginn-Temperatur eines neuen Katalysators liegt; und
- dann, wenn die tatsächliche Temperatur des Katalysators über der Vergleichstemperatur liegt, der Katalysator als funktionsfähig beurteilt wird.

4. Vorrichtung zum Beurteilen der Funktionsfähigkeit eines im Abgaskanal eines Verbrennungsmotors betriebenen Katalysators gemäß dem Verfahren nach Anspruch 3, gekennzeichnet durch:
- eine Temperaturmodelleinrichtung (22) zum Abschätzen der Temperatur des durch das Abgas des Verbrennungsmotors erwärmten Katalysators aus einem Modell, in das jeweils aktuelle Werte von Betdebsgrößen des Verbrennungsmotors eingegeben werden und wobei im Rahmen des Modells für die bei der Konvertierung freiwerdende Wärme von einem gerade noch brauchbaren Katalysator ausgegangen wird.
- eine Vergleichseinrichtung (23), die ein Vergleichssignal ausgibt, wenn die aus dem Modell abgeschätzte Temperatur eine Vergleichstemperatur erreicht hat, die über der Konvertierungsbeginn-Temperatur eines neuen Katalysators liegt; und
- eine Beurteilungseinrichtung (24), die auf das Vergleichssignal hin die tatsächliche Temperatur des Katalysators untersucht und den Katalysator als funktionsfähig beurteilt, wenn die tatsächliche Temperatur über der Vergleichstemperatur liegt.

## Claims

1. Method for assessing the ability to function of a catalytic converter operated in the exhaust duct of an internal-combustion engine, in which
- the internal-combustion engine is operated starting from a state in which the temperature of the catalytic converter is below the conversion start temperature of a new catalytic converter,
- a check is made to determine at what temperature the catalytic converter heated by the exhaust gas from the engine begins to convert,
- the conversion start temperature determined is compared with a predetermined comparison temperature which is above the conversion start temperature of a new catalytic converter, and if the conversion start temperature determined is below the comparison temperature, the catalytic converter is assessed as functional, the temperature at which the catalytic converter starts to convert being checked by calculating an assessment variable BG which corresponds to the ratio of the averaged fluctuations in the lambda value as recorded by an exhaust gas sensor arranged upstream of the catalytic converter and an exhaust gas sensor arranged downstream of the catalytic converter and, when the assessment variable BG falls below a threshold value, the associated temperature of the catalytic converter is recorded as the conversion start temperature.

2. Device for assessing the ability to function of a catalytic converter operated in the exhaust duct of an internal-combustion engine, the assessment being in accordance with the method according to Claim 1, having
- a determination device (13) for checking at what temperature the catalytic converter heated by the exhaust gas from the engine begins to convert, and
- a comparison/assessment device (14.1) which compares the conversion start temperature determined with the conversion start temperature of a new catalytic converter, and assesses the catalytic converter as functional if the conversion start temperature determined is below the comparison temperature characterized in that, to determine the temperature at which the catalytic converter starts to convert, the determination device (13) calculates an assessment variable BG which corresponds to the ratio of the averaged fluctuations in the lambda value as recorded by an exhaust gas sensor arranged upstream of the catalytic converter and an exhaust gas sensor arranged downstream of the catalytic converter and, in that when the assessment variable BG falls below a threshold value, the associated temperature of the catalytic converter is recorded as the conversion start temperature.

3. Method for assessing the ability to function of a catalytic converter operated in the exhaust duct of an internal-combustion engine, the internal-combustion engine being operated starting from a state in which the temperature of the catalytic converter is below the conversion start temperature of a new catalytic converter;
characterized in that
- the characteristic of the temperature of the catalytic converter is estimated from a model to which in each case current values of operating parameters of the internal-combustion engine are input, in the context of the model the heat released during conversion being based on a catalytic converter which is only just still usable;
- the actual temperature of the catalytic converter is checked if the temperature estimated from the model has reached a comparison temperature above the conversion start temperature of a new catalytic converter; and
- if the actual temperature of the catalytic converter is above the comparison temperature, the catalytic converter is assessed as functional.

4. Device for assessing the ability to function of a catalytic converter operated in the exhaust duct of an internal-combustion engine, the assessment being in accordance with the method according to Claim 3, characterized by:
- a temperature model device (22) for estimating the temperature of the catalytic converter heated by the exhaust gas from the internal-combustion engine from a model to which in each case current values of operating parameters of the internal-combustion engine are input, in the context of the model the heat released during the conversion being based on a catalytic converter which is only just still usable;
- a comparison device (23) which emits a comparison signal when the temperature estimated from the model has reached a comparison temperature which is above the conversion start temperature of a new catalytic converter; and
- an assessment device (24) which, in response to the comparison signal, checks the actual temperature of the catalytic converter and assesses the catalytic converter as functional if the actual temperature is above the comparison temperature.

## Revendications

1. Procédé pour évaluer l'aptitude au fonctionnement d'un convertisseur catalytique que l'on fait fonctionner dans la canalisation d'échappement d'un moteur à combustion interne, selon lequel :
- on fait fonctionner le moteur à combustion interne en partant d'un état dans lequel la température du convertisseur catalytique se trouve en dessous de la température du début de conversion d'un nouveau convertisseur catalytique,
- on contrôle à quelle température le convertisseur catalytique réchauffé par les gaz d'échappement du moteur commence à opérer la conversion,
- on compare la température déterminée de début de conversion à une température de comparaison prédéfinie qui se trouve au-dessus de la température de début de conversion d'un nouveau convertisseur catalytique, et
- ensuite, quand la température déterminée de début de conversion se trouve en dessous de la température de conversion, on considère que le convertisseur catalytique est capable de fonctionner,
dans lequel,
pour contrôler à quelle température le catalyseur commence à opérer la conversion, on calcule une grandeur d'évaluation BG qui correspond au rapport des oscillations moyennes des valeurs lambda telles qu'elles ont été débitées par les sondes en amont et en aval du catalyseur, et ensuite, quand la grandeur d'évaluation BG devient inférieure à une valeur de seuil, la température correspondante du catalyseur est prise comme température de début de fonctionnement de conversion.

2. Dispositif pour évaluer l'aptitude au fonctionnement d'un convertisseur catalytique que l'on fait fonctionner dans la canalisation d'échappement d'un moteur à combustion interne, selon le procédé d'après la revendication 1, comprenant :
- un système de détection (13) pour contrôler à quelle température le convertisseur catalytique, échauffé par les gaz d'échappement du moteur à combustion interne, commence à opérer la conversion ; et
- un système de comparaison/évaluation (14.1) qui compare la température de début de conversion déterminée avec la température de début de conversion d'un nouveau convertisseur catalytique et ensuite, quand la température de début de conversion, déterminée, se trouve en dessous de la température de conversion, on considère que le convertisseur catalytique est capable de fonctionner ;
caractérisé en ce que
le système de détection (13), pour contrôler à quelle température le catalyseur commence à opérer la conversion, calcule une grandeur d'évaluation BG qui correspond au rapport des oscillations moyennes des valeurs lambda telles qu'elles ont été détectées par les sondes en amont et en aval du catalyseur, et ensuite, quand la grandeur d'évaluation BG devient inférieure à une valeur de seuil, la température correspondante du catalyseur est prise comme température de début de fonctionnement de conversion.

3. Procédé pour évaluer l'aptitude au fonctionnement d'un convertisseur catalytique que l'on fait fonctionner dans la canalisation d'échappement d'un moteur à combustion interne, dans lequel on fait fonctionner le moteur à combustion interne en partant d'un état dans le cas duquel la température du convertisseur catalytique se trouve en dessous de la température de début de conversion d'un nouveau convertisseur catalytique,
caractérisé en ce qu'
- on évalue l'évolution de la température du convertisseur catalytique à partir d'un modèle dans lequel on entre des valeurs respectives actuelles de grandeurs de fonctionnement du moteur à combustion interne et dans lequel, dans le cadre du modèle pour la chaleur libérée lors de la conversion, on part d'un convertisseur catalytique juste encore utilisable ;
- on contrôle la température effective du convertisseur catalytique quand la température évaluée à partir du modèle a atteint une température de comparaison qui se trouve au-dessus de la température de début de conversion d'un nouveau convertisseur catalytique ; et
- ensuite, quand la température effective du convertisseur catalytique se trouve au-dessus de la température de comparaison, on considère que le convertisseur catalytique est capable de fonctionner.

4. Dispositif pour évaluer l'aptitude au fonctionnement d'un convertisseur catalytique que l'on fait fonctionner dans la canalisation d'échappement d'un moteur à combustion interne, conformément au procédé selon la revendication 3,
caractérisé par
- un système de modèle de température (22) qui sert à évaluer la température du convertisseur catalytique échauffé par les gaz d'échappement du moteur à combustion interne, à partir d'un modèle dans lequel on a introduit respectivement la valeur actuelle des grandeurs de fonctionnement du moteur à combustion interne, et dans lequel, dans le cadre du modèle pour la chaleur libérée lors de la conversion, on part d'un convertisseur catalytique juste encore utilisable ;
- un système de comparaison (23) qui délivre un signal de comparaison, quand la température évaluée à partir du modèle a atteint une température de comparaison, qui se trouve au-dessus de la température de début de conversion d'un nouveau convertisseur catalytique ; et
- un système d'évaluation (24) qui contrôle par le signal de comparaison la température effective du convertisseur catalytique et considère le convertisseur catalytique comme capable de fonctionner quand la température effective se trouve au-dessus de la température de comparaison.
